Europäisches Patentamt

(19) European Patent Office

Office européen des brevets

(11) Veröffentlichungsnummer: **0 006 143**
**B1**

(12) **EUROPÄISCHE PATENTSCHRIFT**

(45) Veröffentlichungstag der Patentschrift:
12.05.82

(51) Int. Cl.³: **B 41 J 19/14,** H 04 L 13/04

(21) Anmeldenummer: 79101572.0

(22) Anmeldetag: 22.05.79

(54) Anordnung zum Antrieb eines Druckerwagens in Fern- oder Datenschreibmaschinen.

(30) Priorität: 12.06.78 DE 2825761

(43) Veröffentlichungstag der Anmeldung:
09.01.80 Patentblatt 80/1

(45) Bekanntmachung des Hinweises auf die Patenterteilung:
12.05.82 Patentblatt 82/19

(84) Benannte Vertragsstaaten:
FR GB IT NL SE

(56) Entgegenhaltungen:
FR-A-2 366 130
US-A-3 942 619

(73) Patentinhaber: SIEMENS AKTIENGESELLSCHAFT
Berlin und München, Postfach 22 02 61,
D-8000 München 22 (DE)

(72) Erfinder: Mayr, Ulrich, Kriegerstrasse 44b,
D-8034 Germering (DE)
Erfinder: Kusmierz, Hans, Leipartstrasse 13,
D-8000 München 70 (DE)
Erfinder: Höreth, Dietmar, Gotthardstrasse 45,
D-8000 München 21 (DE)

## Anordnung zum Antrieb eines Druckerwagens in Fern- oder Datenschreibmaschinen

Die Erfindung betrifft eine Anordnung zum Antrieb eines Druckerwagens in Fern- oder Datenschreibmaschinen, bei denen an dem Druckerwagen ein sich längs einer Zeile relativ zu einer Schreibwalze bewegender Druckkopf angeordnet ist, bei denen die Bewegung des Druckerwagens unter Verwendung eines biegsamen Zugmittels erfolgt, das über zwei Umlenkrollen geführt ist, bei denen an jeder der beiden Umlenkrollen ein Antriebsmotor angeordnet ist.

Aus der französischen Patentschrift 2 366 130 ist eine Anordnung zum Antrieb eines Druckerwagens in Fern- oder Datenschreibmaschinen bekannt, bei denen an dem Druckwagen ein sich längs einer Zeile relativ zu einer Schreibwalze bewegender Druckkopf angeordnet ist. Die Bewegung des Druckerwagens erfolgt unter Verwendung eines angetriebenen biegsamen Zugmittels, wobei zwei das biegsame Zugmittel antreibende Antriebsmotoren zu beiden Seiten des Druckerwagens angeordnet sind. Der erste Antriebsmotor dient zum Antrieb des Druckerwagens für die zeichenweise Bewegung, während der zweite Antriebsmotor für den Rücklauf sorgt. Die Antriebsmotoren sind an den Umlenkstellen des Zugmittels angeordnet und treiben dort vorgesehene Umlenkrollen an.

Bei dem Antrieb eines Druckerwagens über ein endloses Zugmittel, wobei jeder Antriebsrichtung ein gesonderter Motor zugeordnet ist, treten jedoch starke Unterschiede in der Länge des belastenden Mittels auf. Diese Unterschiede hängen ab von der augenblicklichen Position des Druckerwagens und der Bewegungsrichtung des Antriebsmotors. Infolge der Unterschiede zwischen den belasteten Längen des Zugmittels in Abhängigkeit von der Antriebsrichtung des Druckerwagens ist die Eigenfrequenz des aus der Masse des Druckerwagens und der Zugmittelfederkonstante bestehenden Feder-Masse-Systems großen Schwankungen unterworfen.

Der Erfindung liegt daher die Aufgabe zugrunde, eine Anordnung zum Antrieb von Druckerwagen anzugeben, bei denen bei der Bewegung des Druckerwagens in beiden Richtungen längs einer Zeile nur geringe Schwankungen der Eigenfrequenz des Antriebssystems auftreten.

Erfindungsgemäß wird die Aufgabe bei der Anordnung der eingangs genannten Art dadurch gelöst, daß zwei das biegsame Zugmittel gleichzeitig antreibende Antriebsmotoren zu beiden Seiten des Druckerwagens angeordnet sind.

Die Anordnung hat den Vorteil, daß anstelle eines großen Antriebsmotors zwei kleine Antriebsmotoren eingesetzt werden können, deren wärmeabführende Oberflächen größer ist als bei einem einzelnen, gleich starken Antriebsmotor. Außerdem hat die Anordnung den Vorteil, daß die Kraftübertragung auf den Druckerwagen immer über ein kurzes Stück des Zugmittels erfolgt, das kleiner ist als die halbe Zugmittellänge. Sowohl im Vorwärts- als auch im Rückwärtslauf und sowohl beim Beschleunigen als auch beim Bremsen bleibt das Zugmittel über der gesamten Länge gespannt und Schwingungen des Zugmittels werden weitgehend vermieden. Durch die Verwendung der beiden Antriebsmotoren ist das Schwingungsverhalten der Anordnung bei der Bewegung des Druckerwagens in beiden Richtungen gleich, so daß beim Drucken in Vorwärtsrichtung und beim Drucken in Rückwärtsrichtung das Zugmittel in gleicher Weise belastet wird und sich damit das Schwingungsverhalten des Antriebssystems nicht verändert.

Ein weiterer Vorteil der Anordnung besteht darin, daß das zweifache Drehmoment eines Schrittmotors bei nur zweifachem Rotorträgheitsmoment zur Verfügung steht. Ein entsprechend größerer Schrittmotor mit diesen Eigenschaften ist praktisch nicht herstellbar.

Eine vorteilhafte Ausführung der Anordnung wird erreicht, wenn die Antriebsmotoren gleichartig ausgebildet sind. Insbesondere ist es vorteilhaft, wenn die Antriebsmotoren als Schrittmotoren ausgebildet sind.

Für die Ansteuerung der Antriebsmotoren kann die gleiche Steuereinheit verwendet werden, wie bei einer Anordnung mit einem einzigen Antriebsmotor, wenn beide Antriebsmotoren gleichzeitig angesteuert werden.

Wegen einer geringeren thermischen Belastung ist es günstig, wenn während der Betriebspausen ein erforderlicher Haltestrom auf beide Schrittmotoren verteilt wird oder wenn einer der Schrittmotoren stromlos geschaltet wird.

Im folgenden wird ein nach den Merkmalen der Erfindung ausgestaltetes Ausführungsbeispiel anhand der Zeichnungen näher beschrieben. Es zeigt

Fig. 1 eine mit zwei Antriebsmotoren versehene Anordnung zum Antrieb eines Druckerwagens,

Fig. 2 eine schematische Darstellung der Belastung eines biegsamen Zugmittels bei einer bekannten Anordnung mit einem Antriebsmotor,

Fig. 3 eine schematische Darstellung der Belastung des Zugmittels bei einer Anordnung mit zwei Antriebsmotoren.

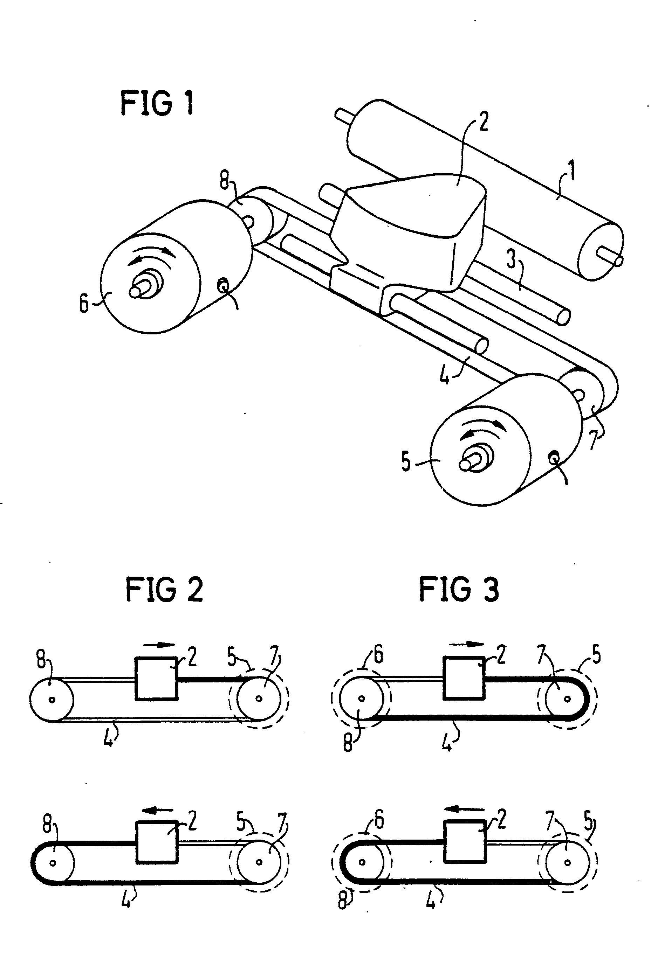

Bei der in Fig. 1 dargestellten Anordnung ist vor einer Schreibwalze 1, welche axial nicht verschieblich im Gehäuse einer Fern- oder Datenschreibmaschine drehbar gelagert ist und zur Aufnahme eines blattförmigen oder bandförmigen Aufzeichnungsträgers dient, ein Druckerwagen 2 auf zwei Schienen 3 verschieblich gelagert, so daß der von der Schreibwalze 1 geführte Aufzeichnungsträger zeilenweise beschrieben wird. Über ein biegsames Zugmittel 4, beispielsweise einen endlosen Zahnprofilriemen, erfolgt während des Schreibbetriebs in der Schreibzeile der schrittweise Antrieb des Druckerwagens 2. Der Antrieb des Zugmittels 4 erfolgt mit Hilfe von zwei Antriebsmotoren 5 und 6, die beispielsweise als Schrittmotoren ausgebildet sind und in der Lage sind, den Druckerwagen 2 in positionsgenaue Abdruckstellungen einzustellen. Die Antriebsmotoren 5 und 6 sind an den Umlenkstellen des Zugmittels 4 angeordnet und treiben jeweils eine Umlenkrolle 7 bzw. 8 an. Der Abdruck von Zeichen auf dem Aufzeichnungsträger kann in beiden Richtungen längs der Zeile erfolgen. Außerdem kann mit Hilfe der beiden Antriebsmotoren 5 und 6 ein Rücklauf des Druckerwagens 2 in eine Ausgangsstellung durchgeführt werden.

Die Antriebsmotoren 5 und 6 werden durch eine nicht dargestellte Steuereinheit angesteuert. Die Steuereinheit kann in gleicher Weise ausgebildet sein, wie für eine Anordnung mit einem einzigen Antriebsmotor. In diesem Fall werden beide Antriebsmotoren gleichzeitig durch die gleichen Signale angesteuert.

In den Arbeitspausen kann jeweils einer der beiden Antriebsmotoren 5 und 6 stromlos geschaltet werden, um höhere thermische Sicherheiten zu erzielen.

Bei der schematischen Darstellung in Fig. 2 sind die Belastungen des biegsamen Zugmittels 4 bei einer bekannten Anordnung mit nur einem Antriebsmotor 5 dargestellt. Das Zugmittel 4 ist über die beiden Umlenkrollen 7 und 8 gespannt. Die Umlenkrolle 7 wird unmittelbar oder unter Verwendung eines Getriebes durch den Antriebsmotor 5 angetrieben. Das Zugmittel 4 ist formschlüssig beispielsweise durch Zahnprofilriemen mit der Umlenkrolle 7 verbunden. In einem Servoantrieb, bei dem der Weggeber z. B. dem Druckerwagen zugeordnet ist, könnte auch eine kraftschlüssige Verbindung mit den Umlenkrollen ausreichen. Der zu bewegende Druckerwagen 2 ist zwischen den Umlenkrollen 7 und 8 mit dem Zugmittel verbunden.

Bei der oberen Darstellung in Fig. 2 wird angenommen, daß sich der Druckerwagen von links nach rechts bewegt und beschleunigt werden soll. Bei der Verwendung eines einzigen Antriebsmotors 5 wird lediglich das kurze Stück des Zugmittels 4 zwischen der Umlenkrolle 7 und dem Druckerwagen 2 belastet. Die Belastung ist durch einen dicken schwarzen Strich dargestellt.

Bei der unteren Darstellung in Fig. 2 wird ebenfalls angenommen, daß sich der Druckerwagen 2 von links nach rechts bewegt, aber abgebremst werden soll. In diesem Fall wird ein verhältnismäßig langes Stück des Zugmittels 4 belastet. Das belastete Stück reicht vom Druckerwagen 2 über die Umlenkrolle 8 bis zur angetriebenen Umlenkrolle 7. Dieses Stück entspricht fast der gesamten Länge des Zugmittels 4, wenn sich der Druckerwagen 2 in der Nähe der Umlenkrolle 7 befindet. Dagegen ist bei der oberen Darstellung in Fig. 2 bei der gleichen Stellung des Druckerwagens 2 das belastete Stück des Zugmittels 4 sehr klein. Die Eigenfrequenz des aus der Masse des Druckerwagens 2 und der Federkonstante des Zugmittels 4 gebildeten Feder-Masse-Systems ist daher großen Schwankungen unterworfen.

Bei der schematischen Darstellung in Fig. 3 ist, entsprechend der Darstellung in Fig. 1 ein zweiter Antriebsmotor 6 bei der Umlenkrolle 8 vorgesehen. Das Zugmittel 4 wird durch die beiden Antriebsmotoren 5 und 6 stets gleichzeitig angetrieben.

Bei der oberen Darstellung in Fig. 3 wird, wie bei der oberen Darstellung in Fig. 2, angenommen, daß sich der Druckerwagen 2 von links nach rechts bewegt und beschleunigt werden soll. Da beide Antriebsmotoren 5 und 6 das Zugmittel 4 antreiben, ist das Zugmittel im Bereich zwischen dem Druckerwagen 2, der Umlenkrolle 7 und der Umlenkrolle 8 belastet.

Bei der unteren Darstellung in Fig. 3 wird, in ähnlicher Weise wie bei der unteren Darstellung in Fig. 2 angenommen, daß sich der Druckerwagen 2 ebenfalls von links nach rechts bewegt und abgebremst wird. In diesem Fall ist das Zugmittel 4 im Bereich zwischen dem Druckerwagen 2, der Umlenkrolle 8 und der Umlenkrolle 7 belastet.

Wie aus Fig. 3 zu ersehen ist, sind die Unterschiede zwischen den belasteten Längen des Zugmittels 4 bei einem Antrieb mit zwei Antriebsmotoren 5 und 6 wesentlich geringer als bei einem Antrieb mit Hilfe eines einzigen Antriebsmotors. Damit wird erreicht, daß sich die Eigenfrequenz des Antriebssystems in Abhängigkeit von der Stellung des Druckerwagens 2 innerhalb der Zeile nur wenig ändert.

Falls der am Druckerwagen 2 angeordnete Druckkopf sowohl in Vorwärts- als auch in Rückwärtsrichtung längs der Zeile drucken soll, wird durch die Verwendung der beiden Antriebsmotoren 5 und 6 ein gleiches Schwingungsverhalten in beiden Druckrichtungen erreicht.

**Patentansprüche**

1. Anordnung zum Antrieb eines Druckerwagens in Fern- oder Datenschreibmaschinen, bei denen an dem Druckerwagen (2) ein sich längs einer Zeile relativ zu einer Schreibwalze (1) bewegender Druckkopf angeordnet ist, bei denen die Bewegung des Druckerwagens (2) unter Verwendung eines biegsamen Zugmittels (4) erfolgt, das über zwei Umlenkrollen (7, 8) geführt ist und bei denen an jeder der beiden Umlenkrollen ein Antriebsmotor (5, 6) angeordnet ist, dadurch gekennzeichnet, daß die beiden Antriebsmotoren (5, 6) das Zugmittel (4) stets gleichzeitig in einer der beiden Bewegungsrichtungen des Druckerwagens (2) antreiben.

2. Anordnung nach Anspruch 1, dadurch gekennzeichnet, daß die Antriebsmotoren (5, 6) gleichartig ausgebildet sind.

3. Anordnung nach einem der Ansprüche 1 oder 2, dadurch gekennzeichnet, daß die Antriebsmotoren (5, 6) als Schrittmotoren ausgebildet sind.

4. Anordnung nach einem der Ansprüche 1 bis 3, dadurch gekennzeichnet, daß die beiden Antriebsmotoren (5, 6) durch die gleichen Signale angesteuert werden.

5. Anordnung nach Anspruch 3, dadurch gekennzeichnet, daß während der Betriebspausen ein erforderlicher Haltestrom auf beiden Schrittmotoren (5, 6) verteilt wird.

6. Anordnung nach Anspruch 3, dadurch gekennzeichnet, daß während der Betriebspausen einer der Schrittmotoren (5, 6) stromlos geschaltet wird.

## Claims

1. Arrangement for the actuation of a printer carriage in teleprinters or data printers, in which a printing head which moves along a row relative to a roller (1) is arranged on the printer carriage (2), and in which the movement of the printer carriage (2) is effected with the aid of a flexible moving means (4) which is guided about two guide rollers (7, 8), and in which a driving motor (5, 6) is arranged on each of the two guide rollers, characterised in that two driving motors (5, 6) always simultaneously actuate the moving means (4) in one of the two directions of motion of the printer carriage (2).

2. Arrangement as claimed in claim 1, characterised in that the driving motors (5, 6) are similarly designed.

3. Arrangement as claimed in one of the claims 1 or 2, characterised in that the driving motors (5, 6) are designed as stepping motors.

4. Arrangement as claimed in one of the claims 1 to 3, characterised in that the two driving motors (5, 6) are actuated by the same signals.

5. Arrangement as claimed in claim 3, characterised in that during the operating pauses a necessary holding current is distributed to both stepping motors (5, 6).

6. Arrangement as claimed in claim 3, characterised in that during the operating pauses, one of the stepping motors (5, 6) is disconnected from the supply.

## Revendications

1. Dispositif pour l'entraînement d'un chariot de télescripteurs ou d'imprimantes de données dans lesquels il est prévu, sur le chariot (2), une tête d'impression se déplaçant le long d'une ligne par rapport à un rouleau d'impression (1), dans lesquels le mouvement du chariot (2) est effectué à l'aide d'un moyen de traction flexible (4) passant sur deux rouleaux de renvoi (7, 8) et dans lesquels un moteur d'entraînement (5, 6) est prévu au niveau de chacun des rouleaux de renvoi, caractérisé par le fait que les deux moteurs d'entraînement (5, 6) entraînent, à la fois et simultanément, le moyen de traction (4) dans l'une des deux directions de déplacement du chariot (2).

2. Dispositif selon la revendication 1, caractérisé par le fait que les moteurs d'entraînement (5, 6) sont d'un même genre.

3. Dispositif selon l'une des revendications 1 ou 2, caractérisé par le fait que les moteurs d'entraînement (5, 6) sont réalisés sous la forme de moteurs pas à pas.

4. Dispositif selon l'une des revendications 1 à 3, caractérisé par le fait que les deux moteurs d'entraînement (5, 6) sont commandés par les mêmes signaux.

5. Dispositif selon la revendication 3, caractérisé le fait que pendant les interruptions de fonctionnement, un courant de maintien qui est nécessaire est réparti sur les deux moteurs pas à pas (5, 6).

6. Dispositif selon la revendication 3, caractérisé par le fait que pendant les interruptions de fonctionnement, l'un des moteurs pas à pas (5, 6) est commuté dans son état de non alimentation en courant.

# FIG 1

# FIG 2

# FIG 3